# FASCICULE DE BREVET EUROPEEN

(11) **EP 0 852 909 B1**
(45) Date de publication et mention de la délivrance du brevet: **26.04.2000**
(21) Numéro de dépôt: 98490002.7
(22) Date de dépôt: 12.01.1998
(51) Int. Cl.: A23F 5/44, A23F 5/38

(54) **Procédé de production d'un produit à base de chicorée**
Verfahren zur Herstellung eines Produkts auf Basis von Zichorie
Process for preparing a product based on chicory

(30) Priorité: 14.01.1997 FR 9700503
(43) Date de publication de la demande: 15.07.1998
(73) Titulaire: Leroux SA, 59310 Orchies (FR)
(72) Inventeur: Ecochard, Claude, 59155 Faches Thumesnil (FR)
(74) Mandataire: Hénnion, Jean-Claude

(56) Documents cités:
- EP-A- 0 204 256
- EP-A- 0 207 384
- EP-A- 0 331 222
- EP-A- 0 373 697
- BE-A- 767 040
- DE-A- 2 411 323
- FR-A- 2 064 353
- US-A- 3 071 470
- US-A- 3 615 670
- US-A- 4 154 864
- US-A- 4 840 809

## Description

La présente invention concerne la production d'un produit alimentaire à base de chicorée, en pur ou en mélange, sous forme granulée.

La chicorée est une plante herbacée dont une espèce présente une racine qui , torréfiée, peut conduire à la production de ce qui a été longtemps considéré comme un succédané du café et que l'on désigne également sous le terme chicorée.

Cette chicorée se présente actuellement soit en grains soit en poudre. Les grains, non solubles, sont obtenus par concassage de la racine de chicorée séchée puis torréfiée. La poudre, soluble, est obtenue par atomisation de l'extrait aqueux de chicorée.

S'agissant du café soluble, il existe depuis très longtemps une présentation sous forme granulée et , dans laquelle les particules de poudre sont agglomérées de manière à former des granulés de taille plus importante et plus homogène. Cette présentation présente des avantages importants tels qu'une mouillabilité accrue et donc une meilleure instantanéisation. La présentation en granulés facilite également l'écoulement, le transport, le stockage et le dosage du produit.

La granulation ou agglomération de poudre soluble de café est connue et utilisée depuis plusieurs dizaines d'années. En particulier dans le document FR 1 513 730, les particules de café sont mouillées afin de les rendre collantes et sont mises en contact pour former des agglomérés , puis une quantité d'eau suffisante est ajoutée pour abaisser le point de ramollissement du café au point de contact à une température suffisante pour dissoudre lesdits points de contact ; enfin les agglomérés sont chauffés au-delà dudit point de ramollissement pour faire fondre les particules et les sécher. L'agglomération est donc le résultat d'une part du mouillage et d'autre part de la fusion localisée des particules de café soluble.

D'autres techniques ont été développées , notamment dans le document EP.420.509, qui toutes mettent en oeuvre une humidification des particules de poudres de café soluble.

La transposition des techniques précitées à la poudre soluble de chicorée est impossible dans la mesure où la présence d'humidité conduit à la formation d'une pâte qui est inexploitable . Ceci serait dû , selon le demandeur, à la très forte hygroscopicité de la chicorée due à sa teneur élevée en fructose.

Il serait donc possible d'envisager de mettre en oeuvre les techniques précitées d'humidification et de chauffage pour obtenir un produit à base de chicorée sous forme granulée, pour autant soit de mettre en oeuvre la chicorée en faible proportion dans un mélange avec de la poudre soluble de café soit en effectuant un traitement préalable de la poudre de chicorée pour en diminuer de manière conséquente la teneur en fructose.

Dans le document EP 373 697, il est proposé d'éviter l'humidification préalable des particules de poudre en effectuant le chauffage en milieu fermé. Il est essentiel, dans le procédé décrit, de travailler en milieu fermé de manière à conserver toute la teneur en eau inhérente à l'extrait en poudre pour obtenir l'agglomération. La présence d'eau, soit par humidification préalable (EP 420.509) soit en conservant la teneur en eau naturelle de la poudre (EP 373 697) soit par apport d'humidité lors du chauffage (FR 2 064 353) est toujours considérée comme indispensable, lors du chauffage pour obtenir l'agglomération recherchée.

Le document EP 373 697 cite la chicorée, mais ne donne aucun exemple de réalisation relatif à cette substance. Le demandeur a constaté qu'une opération d'agglomération en milieu fermé, sans humidification préalable, mettant en oeuvre la chicorée, conformément à l'enseignement du document EP 373 697 conduit à un produit aggloméré hétérogène, avec une perte de porosité importante dans la zone superficielle et au contraire une grande friabilité au coeur du produit. Cette hétérogénéité est totalement rédhibitoire notamment lorsque le produit aggloméré est destiné à être concassé et broyé pour former des granulés.

Il existe une autre technique de granulation dite par voie sèche, qui met en oeuvre une forte pression, la poudre étant agglomérée entre deux plaques éventuellement munies d'alvéoles. La plaquette de poudre ainsi comprimée est ensuite concassée et tamisée pour obtenir des granules. Avec la poudre soluble de chicorée, cette technique par compression conduit à un agglomérat compact, très dense qui est difficilement soluble.

Le but que s'est fixé le demandeur est de proposer un procédé de production qui permette d'obtenir un produit à base de chicorée, en pur ou en forte proportion, qui se présente sous forme de granulés de poudre soluble et dans lequel la chicorée a conservé sa teneur initiale en fructose, tout en palliant l'inconvénient précité du procédé décrit dans le document EP 373 697.

Ce but est parfaitement atteint par le procédé de l'invention selon la revendication 1.

Sous l'effet de la température , les particules de chicorée soluble fondent superficiellement et , du fait de leur disposition en couche, il se produit un collage des particules entre elles dans leurs zones de contact, ce collage étant définitif après le refroidissement de la couche. On comprend que pour réaliser cette liaison inter particules , il est nécessaire que la montée en température se fasse alors que les particules sont bien en contact les unes avec les autres. S'agissant d'un mélange de matières alimentaires , les particules de chicorée font office de liant dans le cas où la poudre de la ou des autres matières alimentaires utilisées dans le mélange ne fond pas ou a une température de fusion qui est supérieure à celle de la poudre de chicorée. Le mélange en question doit donc être suffisamment homogène et la quantité de chicorée soluble doit être suffisante pour obtenir ce collage entre toutes les particules permettant de réaliser une couche de poudre agglomérée.

Le fait de travailler à l'air libre, et non en milieu fermé comme dans le document EP 373 697, entraîne une circulation de l'air à travers la couche de poudre, tant pendant le chauffage que pendant le refroidissement, ce qui permet d'exploiter de manière optimale le caractère thermoplastique de la poudre de chicorée soluble et d'obtenir un traitement homogène de la couche.

Dans une première variante de réalisation, après l'opération de refroidissement , la couche de poudre agglomérée obtenue est concassée, broyée et tamisée en sorte d'obtenir un produit sous forme granulée .

Dans une seconde variante de réalisation, la couche de poudre est disposée dans un moule, pour obtenir un produit sous forme de plaquette compacte de poudre agglomérée ayant la forme extérieure du moule.

De préférence le procédé de production de l'invention est un procédé continu, la couche de matière alimentaire étant déplacée en regard de moyens de chauffage, notamment rayonnement infrarouges de préférence longs ou circulation d'air chaud en régime laminaire, puis en regard de moyens de refroidissement, notamment circulation d'air de refroidissement en régime laminaire.

S'agissant en particulier d'une couche de poudre de chicorée soluble ayant une épaisseur comprise entre 5 et 20 mm, ladite couche est portée à une température de l'ordre de 95°C et le refroidissement intervient par circulation d'un flux d'air sec à une température comprise entre 20 et 25°C.

La présente invention sera mieux comprise à la lecture de la description qui va être faite de deux exemples de réalisation du procédé de l'invention relatif à la production d'un produit à base de chicorée sous forme de granulés pour le premier et sous forme de plaquette compacte soluble pour le second, illustré par le dessin annexé dans lequel la figure unique est une représentation schématique simplifiée d'une installation de production du produit sous forme granulée.

Le principe général de l'invention consiste à réaliser l'agglomération de particules de poudre soluble de chicorée, seules ou en mélange avec d'autres particules de poudre soluble d'autres ingrédients alimentaires, grâce au caractère thermofusible de la chicorée, sans humidification, sans utiliser la teneur en eau résiduelle des particules de poudre ni sans altération de la teneur en fructose de la chicorée. Pour que cette agglomération se réalise, il est nécessaire d'une part que les particules de chicorée soluble soient portées à une température suffisante pour obtenir leur thermofusion superficielle , température qui est généralement de l'ordre de 95°C, et d'autre part que cette montée en température soit réalisée alors que les particules se trouvent à l'air libre et en contact les unes avec les autres , se présentant sous forme d'une couche de poudre.

Il est à souligner que le demandeur a pu constater qu'à la température précitée de thermofusion superficielle des particules de chicorée soluble, il n'y a pas d'altération des caractéristiques physico-chimiques ni des caractéristiques gustatives spécifiques de la chicorée.

Ce concept général peut conduire à des produits se présentant sous deux formes , qui sont connues pour d'autres produits alimentaires mais qui ne le sont pas pour la chicorée , à savoir sous forme de granules solubles et sous forme de plaquette compacte soluble.

Le premier exemple décrit ci-après concerne la présentation sous forme granulée.

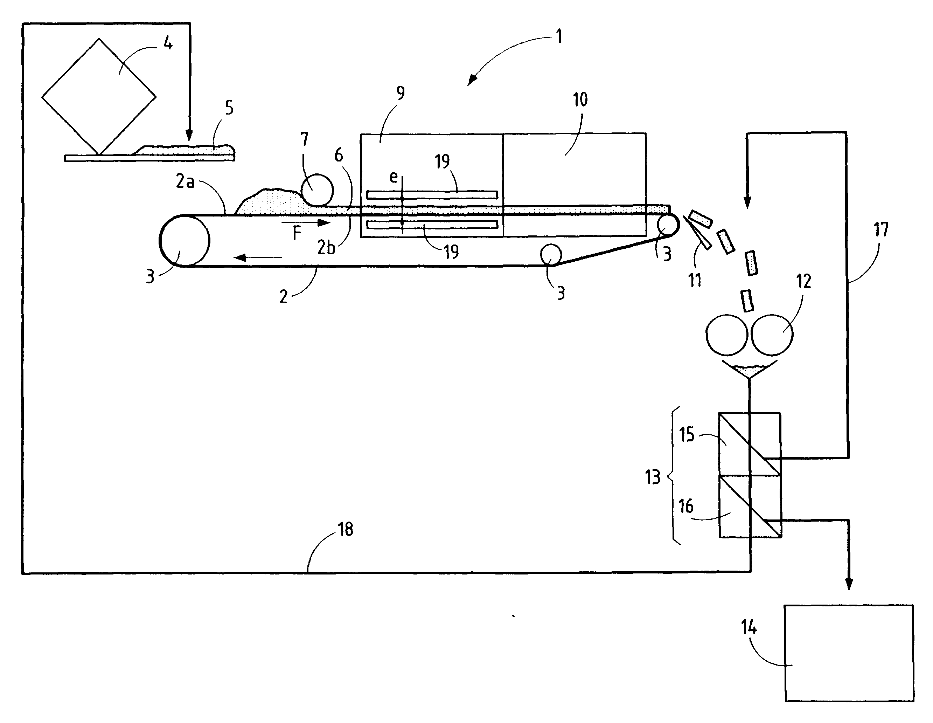

Le produit en question est réalisé sur l'installation illustrée de manière schématique et simplifiée sur la figure 1.

Cette installation 1 comporte un tapis de transport 2 qui est mobile en déplacement dans le sens de la flèche F , étant monté en forme de boucle sur des rouleaux de détour 3, dont au moins l'un est entraîné en rotation par des moyens appropriés.

Un dispositif d'alimentation 4 est disposé au-dessus du brin supérieur 2a du tapis de transport 2, vers 1' amont dudit brin 2a par rapport au sens de déplacement de celui-ci. Ce dispositif d'alimentation 4, qui peut comprendre notamment un basculeur vibrant, est destiné à déposer sur le brin supérieur 2a du tapis 2 une certaine quantité de poudre 5 soluble de chicorée , de manière à former une couche 6 ayant une épaisseur e déterminée, par exemple de l'ordre de 5 mm.

Un cylindre 7 ou une guillotine , positionné précisément au-dessus du brin supérieur 2a du tapis 2 peut réaliser un réglage fin de l'épaisseur e de la couche 6.

L'installation 1 comprend également un poste 9 de chauffage et un poste 10 de refroidissement , qui sont disposés successivement au niveau du tapis 2 en aval du dispositif d'alimentation 4 et éventuellement du cylindre de réglage d'épaisseur 7.

Le poste 9 de chauffage est défini pour porter la couche 6 à une température qui est juste suffisante pour obtenir la thermofusion superficielle des particules constitutives de la couche 6, dans toute son épaisseur e. Cette température est normalement de l'ordre de 95°C. Elle peut éventuellement varier en fonction de la provenance, de la taille des particules , de l'humidité résiduelle desdites particules ...

Les moyens de chauffage mis en oeuvre au poste 9 doivent impérativement ne pas perturber la disposition de la poudre soluble de chicorée sous forme de couche. Ceci peut être obtenu, dans une première variante, par un chauffage à rayonnement infrarouge, plus particulièrement d'infrarouges longs, c'est-à-dire ayant une longueur d'onde λ comprise entre 4 et 10 µm. Dans un exemple précis, non limitatif, des émetteurs 19 infrarouges longs sont disposés de part et d'autre de la couche 6 de poudre à une distance de 5 cm au-dessus et au-dessous de celle-ci, de manière à obtenir une agglomération parfaitement homogène. Dans ce cas, le tapis 2 est dans un matériau sombre, absorbant les infrarouges, par exemple une bande métallique dont la face inférieure 2b est de couleur sombre. La puissance des émetteurs est déterminée pour obtenir l'agglomération complète et homogène de la poudre dans un temps de passage d'environ 90 secondes.

Ceci peut également être obtenu par un chauffage par circulation d'air chaud, étant entendu que le flux d'air, traversant la couche, doit correspondre à un écoulement en régime laminaire, de manière à ne pas perturber la couche 6 de particules. Une agglomération complète et homogène est obtenue avec une circulation d'air chaud à 95°C pendant un temps de passage de l'ordre de 600 secondes.

Le poste 10 de refroidissement a pour fonction d'abaisser la température de la couche 6 à environ 25°C ; les moyens mis en oeuvre peuvent être constitués notamment par une circulation d'air froid et sec, également en régime laminaire, à travers la couche.

L'installation 1 comporte également , en sortie du tapis transporteur 2, un couteau racleur 11 et en-dessous de celui-ci un dispositif de broyage 12, puis un dispositif de tamisage 13 et un dispositif de réception et de stockage 14 des produits granulés.

Le dispositif de tamisage 13 comporte dans l'exemple illustré deux tamis successifs dont les ouvertures de mailles correspondent à la fourchette acceptable pour la granulométrie souhaitée des produits granulés.

L'installation 1 comporte enfin deux systèmes de recyclage 17,18 permettant pour le premier 17 de recycler dans le broyeur 12 les granules qui sont retenus par le premier tamis 15 et qui ont donc une granulométrie trop importante et pour le second 18 de recycler au niveau du dispositif d'alimentation 4 les granules qui sont passés à travers le second tamis 16, c'est-à-dire qui ont une granulométrie trop faible.

Dans un exemple précis de réalisation, les tamis 15,16 avaient une ouverture de mailles respectivement de 3mm et de 0,5mm.

Le produit granulé, dont la granulométrie est comprise entre 0,5 et 3mm , est un produit soluble, 100 % chicorée , sans altération de ses qualités gustatives. Lorsque l'on disperse ce produit granulé sur un liquide chaud , ledit produit granulé est immédiatement solubilisé , au contraire de ce qui se passe lorsque le produit se présente sous forme de poudre soluble de chicorée. En effet, s'agissant d'une poudre , il se forme une couche hydrophobe en surface qui empêche l'eau de pénétrer, tandis que dans le produit granulé de l'invention, l'air qui est inclus dans le réseau des particules de poudre agglomérée permet la pénétration de l'eau par capillarité à l'intérieur du produit granulé et donc sa solubilisation.

Ce qui vient d'être dit pour la chicorée soluble pure est également vrai pour le mélange de poudre de chicorée et d'autres ingrédients alimentaires se présentant sous forme de poudre. Il est préférable que les particules du ou des autres ingrédients alimentaires du mélange aient sensiblement la même taille et la même densité que les particules de chicorée , de manière à pouvoir obtenir dans de bonnes conditions un mélange homogène des différents composants. En effet sauf si les ingrédients complémentaires ont également une certaine plasticité à la température mise en oeuvre dans le poste de chauffage 9, ce sont les seules particules de chicorée soluble qui vont faire office de liant entre toutes les particules du mélange. Pour qu'en sortie du tapis transporteur 2 la couche 6 se présente sous la forme d'un ensemble compact , apte à être d'abord cassé en morceaux grossiers par le couteau racleur 11 puis broyé au poste de broyage 12, il est nécessaire que les contacts entre les particules de chicorée soluble et les autres particules soient suffisants en termes de quantité et de qualité pour obtenir un réseau tridimensionnel monobloc.

Un tel réseau a pu être obtenu de manière satisfaisante avec un mélange comportant au minimum un tiers de particules de chicorée soluble, les autres particules ayant une taille et une densité du même ordre que celles des particules de chicorée soluble. Il s'agissait notamment de poudre de café soluble. Il est à rappeler que la chicorée soluble en poudre a une taille de l'ordre de 250 micromètres.

Dans le second exemple de réalisation, il s'agit de produire non plus un produit granulé, mais un produit à base de chicorée qui se présente sous la forme d'une plaquette compacte soluble.

Un tel produit est obtenu sur une installation qui comporte, comme l'installation 1 ci-dessus, un dispositif d'alimentation 4, un tapis transporteur 2 et des postes de chauffage 9 et de refroidissement 10.

Sur le tapis 2, ou éventuellement intégrées dans la bande transporteuse du tapis 2 , sont prévues des cavités, formant moules , dans lesquelles sont déposées des couches de poudre de chicorée , en pur ou en mélange comme ci-dessus. En sortie du poste de refroidissement 10, on obtient donc, dans chaque cavité , une plaquette compacte de poudre agglomérée , ayant la configuration extérieure de la cavité et l'épaisseur e de la couche.

En sortie du tapis transporteur, chacune de ces plaquettes peut être récupérée soit en vrac soit individuellement pour être emballée.

Cet emballage peut d'ailleurs consister dans un conditionnement , comportant une ou plusieurs cavités , qui est déposé en entrée sur le tapis et qui est recouvert , en sortie du tapis, d'une feuille plastique servant d'opercule.

Il est donc possible , grâce à l'invention, d'obtenir de la chicorée soluble sous une présentation similaire à un morceau de sucre, sous la forme d'un parallélépipède rectangle.

## Revendications

1. Procédé de production d'un produit alimentaire soluble à base de chicorée, caractérisé en ce qu'il consiste à préparer, sans humidification, une couche (6) d'une matière alimentaire, se présentant sous forme d'une poudre soluble, à base soit de chicorée seule soit d'un mélange ayant au moins un tiers en poids de chicorée, à porter ladite couche, à l'air libre, à une température suffisante pour réaliser la thermofusion superficielle de la poudre de chicorée , puis à refroidir.

2. Procédé selon la revendication 1, caractérisé en ce que les particules de la ou des autres matières alimentaires ont une taille et une densité qui sont du même ordre que la taille et la densité des particules de chicorée dans le mélange.

3. Procédé selon l'une des revendications 1 ou 2, caractérisé en ce que, après l'opération de refroidissement, la couche de poudre agglomérée obtenue est concassée, broyée et tamisée en sorte d'obtenir un produit sous forme granulée.

4. Procédé selon l'une des revendications 1 ou 2, caractérisé en ce que la couche de poudre est disposée dans un moule, pour obtenir un produit sous forme de plaquette compacte de poudre agglomérée ayant la forme extérieure du moule.

5. Procédé selon l'une des revendications 1 à 4, caractérisé en ce que, s'agissant d'un procédé continu, la poudre de matière alimentaire est déplacée en regard de moyens de chauffage, pendant un temps de passage suffisant pour obtenir l'agglomération complète et homogène de la couche, puis en regard de moyens de refroidissement, notamment circulation d'air de refroidissement en régime laminaire à travers la couche.

6. Procédé selon la revendication 5 caractérisé en ce que les moyens de chauffage sont des émetteurs d'infrarouges longs disposés au-dessus et en-dessous de la couche de poudre, supportée par une bande dans un matériau sombre absorbant les infrarouges.

7. Procédé selon la revendication 5 caractérisé en ce que les moyens de chauffage consistent en des moyens de circulation d'air chaud, à environ 95 ° C, en régime laminaire à travers la couche.

8. Procédé selon l'une des revendications 5 à 7, caractérisé en ce que, s'agissant d'une couche de poudre de chicorée soluble ayant une épaisseur comprise entre 5 et 20 mm, ladite couche est portée à une température de l'ordre de 95°C et le refroidissement intervient par circulation d'un flux d'air sec à une température comprise entre 20 et 25°C.

## Patentansprüche

1. Herstellungsverfahren für ein lösliches Nahrungsmittel auf der Basis von Zichorie, dadurch gekennzeichnet, daß es darin besteht, ohne Anfeuchten eine Schicht (6) aus einem Nahrungsstoff herzustellen, der in Form eines löslichen Pulvers vorliegt, entweder nur auf der Basis von Zichorie oder auf der Basis einer Mischung mit mindestens einem Drittel an Gewicht von Zichorie, diese Schicht im Freien auf eine ausreichende Temperatur zu bringen, um die oberflächliche Wärmeschmelzung des Zichoriepulvers zu erhalten, und dann abzukühlen.

2. Verfahren nach Anspruch 1, dadurch gekennzeichnet, daß die Teilchen des Nahrungsstoffs oder der anderen Nahrungsstoffe eine Größe und eine Dichte aufweisen, die von der gleichen Größenordnung sind wie die Größe und die Dichte der Zichorieteilchen in der Mischung.

3. Verfahren nach einem der Ansprüche 1 oder 2, dadurch gekennzeichnet, daß nach dem Vorgang des Abkühlens die erhaltene Schicht aus zusammengeballtem Pulver zerstampft, zermahlen und gesiebt wird, um ein Produkt in Form eines Granulats zu erhalten.

4. Verfahren nach einem der Ansprüche 1 oder 2, dadurch gekennzeichnet, daß die Pulverschicht in einer Form angeordnet wird, um ein Produkt in Form einer kompakten Platte von zusammengeballtem Pulver zu erhalten, die die äußere Gestalt der Form aufweist.

5. Verfahren nach einem der Ansprüche 1 bis 4, dadurch gekennzeichnet, daß, da es sich um ein kontinuierliches Verfahren handelt, das Pulver aus Nahrungsstoff während einer Zeitspanne an Heizmitteln vorbei bewegt wird, die ausreichend ist, um die vollständige und homogene Zusammenballung der Schicht zu erhalten, und dann an Kühlmitteln vorbei bewegt wird, insbesondere einer Zirkulation von Kühlluft im laminaren Strömungsbetrieb durch die Schicht.

6. Verfahren nach Anspruch 5, dadurch gekennzeichnet, daß die Heizmittel lange Infrarotsender sind, die oberhalb und unterhalb der Pulverschicht angeordnet sind, die von einem Band aus dunklem Material getragen wird, das die Infrarotwellen absorbiert.

7. Verfahren nach Anspruch 5, dadurch gekennzeichnet, daß die Heizmittel aus Mitteln zum Zirkulieren von Heißluft bei etwa 95°C im laminaren Strömungsbetrieb durch die Schicht bestehen.

8. Verfahren nach einem der Ansprüche 5 bis 7, dadurch gekennzeichnet, daß, wenn es sich um eine Schicht aus löslichem Zichoriepulver handelt, deren Dicke zwischen 5 und 20 mm liegt, diese Schicht auf eine Temperatur von etwa 95°C gebracht wird und das Abkühlen durch Zirkulation eines Trockenluftstroms bei einer Temperatur zwischen 20 und 25°C erfolgt.

## Claims

1. A method of producing a soluble food product based on chicory, the method being characterised in that consists in preparing, without moistening, a layer (6) of foodstuff in the form of a soluble powder, based either on chicory alone or on a mixture having at least one-third by weight of chicory, in raising said layer in ambient air to a temperature that is sufficient to achieve surface melting of the chicory powder, and then in cooling it.

2. A method according to claim 1, characterised in that the particles of the other foodstuff(s) are of a size and a density that are of the same order as the size and the density of the particles of chicory in the mixture.

3. A method according to claim 1 or 2, characterised in that, after the cooling operation, the resulting layer of agglomerated powder is crushed, ground, and screened so as to obtain a product in the form of granules.

4. A method according to claim 1 or 2, characterised in that the layer of powder is placed in a mould to obtain a product in the form of a compact slab of agglomerated powder having the outside shape of the mould.

5. A method according to one of claims 1 to 4, characterised in that, since the method is a continuous method, the foodstuff powder is moved past heating means for a sufficient length of time to obtain complete and uniform agglomeration of the layer, and then past cooling means, in particular means making use of cooling air circulating under laminar conditions through the layer.

6. A method according to claim 5, characterised in that the heating means are emitters of long-wave infrared radiation disposed above and below the layer of powder, which is supported on a strip of dark material that absorbs the infrared radiation.

7. A method according to claim 5, characterised in that the heating means are constituted by means for circulating hot air at about 95°C under laminar conditions through the layer.

8. A method according to one of claims 5 to 7, characterised in that, for a layer of soluble chicory powder having a thickness lying in the range 5 mm to 20 mm, said layer is raised to a temperature of the order of 95°C, and cooling is performed by means of a flow of dry air circulating at a temperature lying in the range 20°C to 25°C.
